# EUROPEAN PATENT APPLICATION

(11) **EP 2 457 937 A1**
(43) Date of publication of application: **30.05.2012**
(21) Application number: 10192634.3
(22) Date of filing: 25.11.2010
(51) Int. Cl.: C08G 18/38, C08G 18/79, C09D 175/02, C08K 3/36

(54) **Curing on demand polyurethane composition suitable for the preparation of coatings or floorings**

(71) Applicant: Sika Technology AG, 6340 Baar (CH)
(72) Inventor: Elmendorf, David C, 07456 Ringwood NJ (US); Pusel, Thomas, 71696 Möglingen (DE); Zilg, Carsten, 70825 Korntal-Münchingen (DE); Strauss, Susanne, 70597 Stuttgart (DE)
(74) Representative: Sika Patent Attorneys

(57) **Abstract**

The present invention relates to three component polyurethane compositions consisting of a polyisocyanate component (**C1**) and a hardener component (**C2**) and an accelerator component (**C3**). The hardener component (**C2**) comprises at least a derivative of aspartic acid and the accelerator component (**C3**) comprises at least water which is bound to a carrier material (**CM**). This composition allows to be applied to a large area and showing fast cure without using accelerators and without being problematic or toxic to health and environment. By adding the accelerator component (**C3**) the curing is accelerated, i.e. the three component polyurethane system allows a curing on demand. Due to these properties the composition is particularly useful for flooring.

## Description

### Technical field

The invention relates to the field of polyurethane floors.

### Background of the invention

Polyurethane compositions are known for a long time and are broadly used for the preparation of coating and flooring products. In application on large area two aspects are colliding. On the one hand the composition should have a long open time, or pot life allowing the application on a large surface. On the other hand, the composition should cure fast allowing the coating or flooring to be over coated or to be exposed to foot or light vehicle traffic within a short time after the application.

This problem might be solved by using heat or radiation sources allowing a fast cure after exposure to said energy source. Heat or light activated hardeners are used in those compositions. However, it is very difficult to apply this approach to thick layer coatings or floorings, because the light will be completely absorbed by the top thin surface layer and a complete through cure is difficult to achieve. In case of heat activation it is very difficult to dose the heat energy. If the heat is too low the curing acceleration is very low, if the heat is too high the risk that the coating or flooring is thermally damaged at the surface is very high. Furthermore both approaches also need specific and complex equipment and have a large risk of deteriorating the surface. This is very important as the visual aspect of the surface of a coating or flooring is a key feature.

A further approach is the use of a latent hardener or catalyst. For example WO 2006/030029 A1 discloses a polyurethane composition comprising a polyisocyanate, a polythiol and a latent base catalyst. Due to the ingredients such a system is very disadvantageous in view of danger for safety and environment.

Polyaspartics are known to react with polyisocyanates. US 5,736,604 discloses an aqueous polyurethane composition which is used for the preparation of coatings. The aqueous coating composition has a 20 to 96% solid content and the large amount of water is used as a non-organic solvent leading to improved application characteristics and fast cure. However, despite the fact that this system shows a fast cure they are limited to small area application.

### Summary of the invention

Therefore, the problem to be solved by the present invention is to offer a polyurethane composition able to be applied to a large area and showing fast cure without using accelerators and without being problematic or toxic to health and environment.

Unexpectedly and very surprisingly, this problem was solved by three component polyurethane composition according to claim 1 of this invention.

The polyisocyanate component (**C1**) and a hardener component (**C2**) are reactive and their curing is accelerated by the accelerator component (**C3**). This allows a formulated system with a polyisocyanate component (**C1**) and a hardener component (**C2**), representing a polyurethane system having a sufficient long open time allowing a large area application without premature cure. By adding the accelerator component (**C3**) the curing is accelerated, i.e. the three component polyurethane system allows a curing on demand.

The ecological aspect is very advantageous, as the accelerating agent in the accelerator component is water. Furthermore, due to the broad variety of possible carrier materials to which the water is bound, the carrier material can be easily selected so that the ecotoxic impact is minimal. As any excess of water should be avoided because this would lead to undesired lowering of mechanical properties and surface aspects the accelerator component (**C3**) of the present invention is very advantageous because it allows easy and homogenous dosage of water to be applied onto the polyisocyanate component (**C1**) and hardener component (**C2**).

The composition of the invention is extremely well suited for their application as coating and flooring.

Particularly preferred embodiments of the invention are the subject matter of the dependent claims.

### Detailed description of the invention

The present invention relates to a three component polyurethane composition which consists of a polyisocyanate component (**C1**) and a hardener component (**C2**) and an accelerator component (**C3**).

The polyisocyanate component (**C1**) comprises at least a polyisocyanate (**PI**).

The hardener component (**C2**) comprises at least a compound of formula (I). 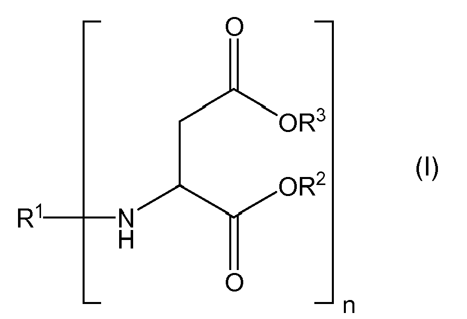 wherein
R¹ represents a n-valent organic radical
R² and R³ represent independently of one another an aliphatic or cycloaliphatic or aromatic radical.
n is a value of 2 to 6, particularly 2 or 3.

The accelerator component (**C3**) comprises at least water which is bound to a carrier material (**CM**).

The term "polyisocyanate" in the present document encompasses compounds having two or more isocyanate groups, independently of whether they are monomeric diisocyanates, oligomeric polyisocyanates, or polymers containing isocyanate groups and having a relatively high molecular weight (typically larger than 1000 g/mol).

The term "polymer" in the present document encompasses on the one hand a collective of macromolecules which, while being chemically uniform, nevertheless differ in respect of degree of polymerization, molar mass, and chain length, and have been prepared by a polymerization reaction (chain-growth addition polymerization, polyaddition, polycondensation, radical polymerization). The term also, moreover, encompasses derivatives of such a collective of macromolecules from polymerization reactions, in other words compounds which have been obtained by means of reactions, such as additions or substitutions, for example, of functional groups on existing macromolecules, and which may be chemically uniform or chemically nonuniform. The term also encompasses, furthermore, what are known as prepolymers, by which are meant reactive oligomeric pre-adducts whose functional groups take part in the construction of macromolecules.

In the present document, substance names beginning with "poly", such as polyisocyanate or polyol or polythiol denote substances which, in a formal sense, contain two or more of the functional groups which occur in their name per molecule.

"Room temperature" means in the present document a temperature of 23°C.

The person skilled in the art in this field uses frequently the term "two component" instead of the term "two-part" mentioned before. In any of these cases a chemically reactive system is meant which comprises of individual reactive ingredients which are stored in two separate compartments, respectively packs, in order to avoid the spontaneous reaction between said reactive ingredients.

In the present document, the bold-labelling of references such as **C1**, **C2**, **C3**, **PI, PI-M**, **PUP**, **CM** or the like are used only for better reading comprehension and identification.

The polyisocyanate component (**C1**) comprises at least a polyisocyanate (**PI**).

In one embodiment the polyisocyanate (**PI**) is a monomeric polyisocyanate (**PI-M**), particularly a monomeric diisocyanate or triisocyanate.

Said monomeric polyisocyanate may be an aromatic or an aliphatic polyisocyanate. Preferred monomeric polyisocyanate are aliphatic polyisocyananates.

"Aromatic polyisocyanate" identifies an organic compound which contains exclusively aromatic isocyanate groups. "Aromatic" identifies an isocyanate group which is attached to an aromatic or heteroaromatic radical. "Aliphatic polyisocyanate" identifies an organic compound which contains aliphatic isocyanate groups. "Aliphatic" identifies an isocyanate group which is attached to an aliphatic, cycloaliphatic or arylaliphatic radical.

Examples of suitable aromatic monomeric polyisocyanates include polyisocyanates such as 2,4- and 2,6-tolylene diisocyanate and any desired mixtures of these isomers (TDI), 4,4'-, 2,4'- and 2,2'-diphenylmethane diisocyanate and any desired mixtures of these isomers (MDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatobiphenyl (TODI), dianisidine diisocyanate (DADI), 1,3,5-tris(isocyanatomethyl)benzene, tris(4-isocyanatophenyl)methane and tris-(4-isocyanatophenyl) thiophosphate.

Examples of suitable aliphatic monomeric polyisocyanates include polyisocyanates such as 1,4-tetramethylene diisocyanate, 2-methylpentamethylene 1,5-diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12-dodecamethylene diisocyanate, lysine diisocyanate and lysine ester diisocyanate, cyclohexane-1,3- and 1,4-diisocyanate, 1-methyl-2,4-and 2,6-diisocyanatocyclohexane and any desired mixtures of these isomers (HTDI or H₆TDI), 1-isocyanato-3,3,5-trimethyl-5-isocyanatomethylcyclohexane (= isophorone diisocyanate or IPDI), perhydro-2,4'- and 4,4'-diphenylmethane diisocyanate (HMDI or H₁₂MDI), 1,4- diisocyanato-2,2,6-trimethylcyclohexane (TMCDI), 1,3- and 1,4-bis(isocyanatemethyl)cyclohexane, m- and p-xylylene diisocyanate (m- and p-XDI), m- and p-tetramethyl-1,3- xylylene diisocyanate and -1,4-xylylene diisocyanate (m- and p-TMXDI), bis(1-isocyanato-1-methylethyl)naphthalene, dimer and trimer fatty acid isocyanates such as 3,6-bis(9-isocyanatononyl)-4,5-di-(1-heptenyl)cyclohexane (dimeryl diisocyanate) and α,α,α',α',α",α"-hexamethyl-1,3,5-mesitylene triisocyanate.

In a further embodiment the polyisocyanate (**PI**) is an oligomeric polyisocyanate (**PI-O**) of the above mentioned monomeric polyisocyanates (**PI-M**).

Suitable oligomers of a monomeric diisocyanate include more particularly the oligomers of HDI, IPDI and TDI. In practice, such oligomers usually constitute mixtures of substances having different degrees of oligomerization and/or chemical structures. They preferably have an average NCO functionality of 2.1 to 4.0 and contain, more particularly isocyanurate groups, iminooxa-diazinedione groups, uretdione groups, urethane groups, biuret groups, allophanate groups, carbodiimide groups, uretonimine groups or oxadiazinetrione groups. They preferably have a low monomeric diisocyanate content. Commercially available products are, more particularly, HDI biurets, for example Desmodur^{®} N 100 and Desmodur^{®} N 3200 (from Bayer), Tolonate^{®} HDB and Tolonate^{®} HDB-LV (from Perstorp) and also Duranate^{®} 24A-100 (from Asahi Kasei); HDI isocyanurates, examples being Desmodur^{®} N 3300, Desmodur^{®} N 3600 and Desmodur^{®} N 3790 BA (from Bayer), Desmodur^{®} N 3390 BA (from Bayer), Tolonate^{®} HDT, Tolonate^{®} HDT-LV and Tolonate^{®} HDT-LV2 (from Perstorp), (Duranate^{®} TPA-100 and Duranate^{®} THA-100 (from Asahi Kasei) and also Coronate^{®} HX (from Nippon Polyurethane); HDI uretdiones, an example being Desmodur^{®} N 3400 (from Bayer); HDI iminooxadiazinediones, an example being Desmodur^{®} N 3900 (from Bayer); HDI allophanates, an example being Desmodur^{®} VP LS 2102 (from Bayer); IPDI isocyanurates, examples being Desmodur^{®} Z 4470 (from Bayer) and Vestanat^{®} T1890/100 (from Evonik); TDI oligomers, an example being Desmodur^{®} IL (from Bayer); and also mixed isocyanurates based on TDI/HDI, as for example Desmodur^{®} HL (from Bayer).

In a further embodiment the polyisocyanate (**PI**) is a polyurethane polymer (**PUP**) containing isocyanate groups.

The term "polyurethane polymer" encompasses all polymers which are prepared by the process known as the diisocyanate polyaddition process. This also includes those polymers which are entirely or virtually free from urethane groups. Examples of polyurethane polymers are polyether-polyurethanes, polyester-polyurethanes, polyether-polyureas, polyureas, polyester-polyureas, polyisocyanurates and polycarbodiimides.

One suitable polyurethane polymer (**PUP**) is obtainable more particularly from the reaction of at least one polyol with at least one polyisocyanate, particularly with a monomeric polyisocyanates (**PI-M**) and/or an oligomeric polyisocyanate (**PI-O**) being both mentioned above.

This reaction may involve the polyol and the polyisocyanate being reacted by customary methods, at temperatures, for example of 50°C to 100°C, optionally with accompanying use of suitable catalysts, the amount of the polyisocyanate being such that its isocyanate groups are present in a stoichiometric excess in relation to the hydroxyl groups of the polyol. The amount of the polyisocyanate is advantageous such that an NCO/OH ratio of 1.3 to 5, more particularly of 1.5 to 3, is observed. The "NCO/OH ratio" means the ratio of the number of isocyanate groups used to the number of hydroxyl groups used. After the reaction of all of the hydroxyl groups of the polyol, the polyurethane polymer (**PUP**) preferably retains a free isocyanate group content of 0.5 to 15% by weight, more preferably of 0.5 to 10% by weight.

The polyols which can be used for preparing a polyurethane polymer (**PUP**) include, for example, the following commercially customary polyols or mixtures thereof:
- polyoxyalkylene polyols, also called polyether polyols or oligoetherols, which are polymerization products of ethylene oxide, 1,2-propylene oxide, 1,2- or 2,3-butylene oxide, oxetane, tetrahydrofuran or mixtures thereof, optionally polymerized by means of a starter molecule having two or more active hydrogen atoms, such as, for example, water, ammonia or compounds having two or more OH or NH groups, such as, for example, 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and also mixtures of the aforementioned compounds. Use may be made not only of polyoxyalkylene polyols which have a low degree of unsaturation (measured in accordance with ASTM D-2849-69 and expressed in milliequivalents of unsaturation per gram of polyol (meq/g)), prepared, for example, by means of what are called double metal cyanide complex catalysts (DMC catalysts), but also of polyoxyalkylene polyols having a higher degree of unsaturation, prepared, for example, by means of anionic catalysts such as NaOH, KOH, CsOH or alkali metal alkoxides.
   Particularly suitable are polyoxyalkylene diols or polyoxyalkylene triols, more particularly polyoxyethylene and polyoxypropylene diols and triols. Especially suitable are polyoxyalkylene diols and triols having a degree of unsaturation of less than 0.02 meq/g and having a molecular weight in the range of 1000 - 30 000 g/mol, and also polyoxypropylene diols and triols having a molecular weight of 400 - 8000 g/mol.
   Likewise particularly suitable are what are called ethylene oxide-terminated ("EO-end capped", ethylene oxide-end capped) polyoxypropylene polyols. The latter are special polyoxypropylene-polyoxyethylene polyols which are obtained, for example, by further alkoxylating pure polyoxypropylene polyols, more particularly polyoxypropylene diols and triols, with ethylene oxide after the end of the polypropoxylation reaction, and as a result contain primary hydroxyl groups.
- Styrene-acrylonitrile or acrylonitrile-methyl methacrylate-grafted polyether polyols.
- Polyester polyols, also called oligoesterols, prepared for example from dihydric to trihydric alcohols such as, for example, 1,2-ethanediol, diethylene glycol, 1,2-propanediol, dipropylene glycol, 1,4-butanediol, 1,5-pentanediol, 1,6-hexanediol, neopentylglycol, glycerol, 1,1,1-trimethylolpropane or mixtures of the aforementioned alcohols with organic dicarboxylic acids or their anhydrides or esters such as, for example, succinic acid, glutaric acid, adipic acid, suberic acid, sebacic acid, dodecanedicarboxylic acid, maleic acid, fumaric acid, phthalic acid, isophthalic acid, terephthalic acid and hexahydrophthalic acid or mixtures of the aforementioned acids, and also polyester polyols from lactones such as ε-caprolactone, for example.
- Polycarbonate polyols, of the kind obtainable by reaction, for example, of the abovementioned alcohols - those used to construct the polyester polyols - with dialkyl carbonates, diaryl carbonates or phosgene.
- Block copolymers which carry at least two hydroxyl groups and which contain at least two different blocks with polyether, polyester and/or polycarbonate structure of the type described above.
- Polyacrylate polyols and polymethacrylate polyols.
- Polyhydrocarbon polyols, also called oligohydrocarbonols, such as, for example, polyhydroxy-functional ethylene-propylene, ethylene-butylene or ethylene-propylene-diene copolymers, of the kind produced, for example, by the company Kraton Polymers, or polyhydroxy-functional copolymers of dienes such as 1,3-butanediene or diene mixtures and vinyl monomers such as styrene, acrylonitrile or isobutylene, or polyhydroxy-functional polybutadiene polyols, such as, for example, those which are prepared by copolymerization of 1,3-butadiene and allyl alcohol and which may also have been hydrogenated.
- Polyhydroxy-functional acrylonitrile/butadiene copolymers, of the kind preparable, for example, from epoxides or amino alcohols and carboxylterminated acrylonitrile/butadiene copolymers (available commercially under the name Hypro^{®} CTBN from Hanse Chemie).

These stated polyols preferably have an average molecular weight of 250 - 30 000 g/mol, more particularly of 400 - 20 000 g/mol, and preferably have an average OH functionality in the range from 1.6 to 3.

Preferred polyols are polyether, polyester, polycarbonate and polyacrylate polyols, preferably diols and triols. Particularly preferred are polyether polyols, more particularly polyoxypropylene polyols and polyoxypropylene-polyoxyethylene polyols.

The polyisocyanate (**PI**) is preferably diisocyanate or triisocyanate or a oligomer thereof.

Suitable di- or triisocyanates are, for example, as follows: 1,4-tetramethylene diisocyanate, 2-methylpentamethylene 1,5-diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12-dodecamethylene diisocyanate, lysine and lysine ester diisocyanate, cyclohexane 1,3- and 1,4-diisocyanate, 1-methyl-2,4- and -2,6-diisocyanatocyclohexane and any mixtures of these isomers (HTDI or H₆TDI), 1-isocyanato-3,3,5-trimethyl-5-isocyanatomethylcyclohexane (=isophorone diisocyanate or IPDI), perhydro-2,4'- and -4,4'-diphenylmethane diisocyanate (HMDI or H₁₂MDI), 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3- and -1,4-xylylene diisocyanate (m- and p-TMXDI), bis(1-isocyanato-1-methylethyl)naphthalene, dimer and trimer fatty acid isocyanates such as 3,6-bis(9-isocyanatononyl)-4,5-di(1-heptenyl)cyclohexene (dimeryl diisocyanate), α,α,α',α',α",α"-hexamethyl-1,3,5-mesitylene triisocyanate, 2,4-and 2,6-tolylene diisocyanate and any mixtures of these isomers (TDI), 4,4'-, 2,4'- and 2,2'-diphenylmethane diisocyanate and any mixtures of these isomers (MDI), mixtures of MDI and MDI homologues (polymeric MDI or PMDI), 1,3-and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), 1,3,5-tris(isocyanatomethyl)benzene, tris(4-isocyanatophenyl)methane and tris(4-isocyanatophenyl) thiophosphate.

The oligomers of the di- or triisocyanates are preferably isocyanurates, iminooxadiazinediones, uretdiones, biurets or allophanates of the di- or triisocyanates mentioned in the previous paragraph.

The polyisocyanate (**PI**) is preferably an aliphatic or cycloaliphatic diisocyanate or triisocyanate or an oligomer thereof.

More preferably the polyisocyanate (**PI**) is a biuret or an uretdione or an isocyanurate of 1,6-hexamethylene diisocyanate (HDI).

The hardener component (**C2**) comprises at least a compound of formula (I).

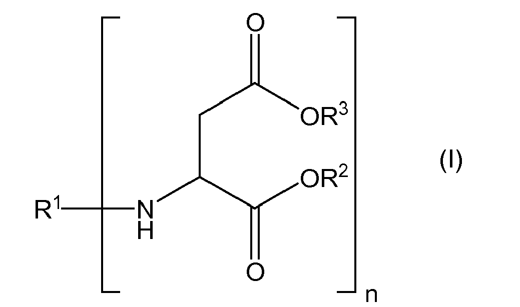

R¹ represents a n-valent organic radical. Particularly, R¹ is n-valent aliphatic or cycloaliphatic or aromatic radical. Preferably R¹ does not have any terminal (i.e. directly linked to the NH as shown in above in formula (I)) and hence R¹ may be considered to be a polyamine with n primary amino groups which are sterically hindered. Preferably R¹ is a n-valent cycloaliphatic radical. In a particularly preferred embodiment R¹ represents formula (II) or (III) or (IV), particularly of formula (IIa) or (IIIa) or (IVa).

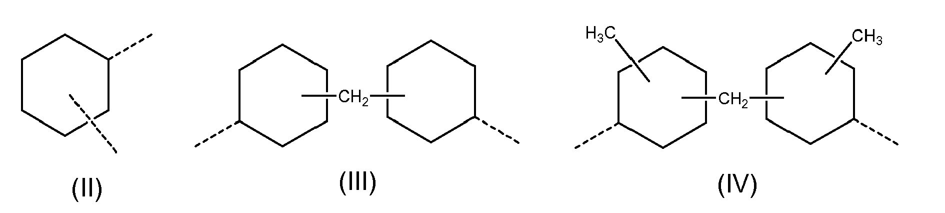

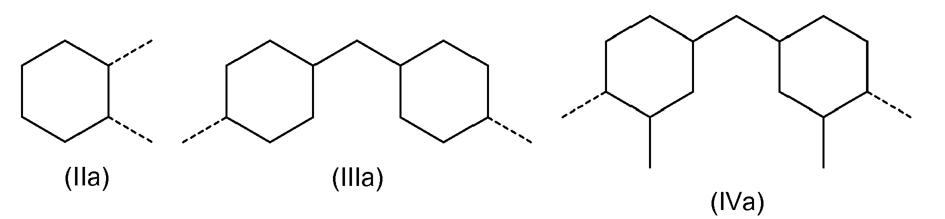

The dotted lines indicate the binding site to the other substituents in the formula (I).

Preferred R² and R³ are identical. Particularly R² and R³ are alkyl groups, more preferably an alkyl group with 1 to 6, particularly 1 to 4, carbon atoms. Most preferred R² and R³ both stand for methyl groups.

Most preferred represents n a value of 2.

In a preferred embodiment the compound of formula (I) has an amine value of 150 - 230 mg KOH/g, particularly of 185 - 205 mg KOH/g.

Further preferred is that the compound of formula (I) has at 25°C a viscosity of between 700 and 3000 mPas, particularly between 750 and 2500 mPas, measured according to DIN 53 019.

It is preferred that the compound of formula (I) is liquid at room temperature. More preferred the compound of formula (I) has a viscosity of less than 2500 mPa•s measured at 25°C according to DIN 56 019.

In a preferred embodiment compound of formula (I) are those being commercially available under the tradename Desmophen® NH from Bayer Material science.

The accelerator component (**C3**) comprises at least water which is bound to a carrier material (**CM**).

The term "bound" means in the present invention either fixed by means of a chemical bond or by means of adsorption or absorption. I a further -less preferred - embodiment the term "bound" also means fixed by means of electrostatic or hydrogen bonding.

Water is an accelerating agent. It is important to realize that this bonding is not a final bonding but that in the presence of a polyisocyanate the water may be released at room temperature and ambient pressure.

Examples for such carrier materials are solids such as quartz powder, quartz sand, color quartz sand, silica gel, ceolithes, molecular sieves, pigments, super absorbing polymers or ionic polysaccharides. The term super absorbing polymer is known to the person skilled in the art. They are typically used in products of intimate hygiene such as diapers and are typically based on polyacrylic acids.

In one preferred embodiment the carrier material (**CM**) is an ionic polysaccharide.

In another preferred embodiment the carrier material (**CM**) is an inorganic particulate material, particularly sand.

The particulate carrier material has preferably a mean particle size of between 50 µm and 5 mm, preferably between 100 µm and 900 µm.

The water is typically bound to the carrier material by exposing the carrier material to air of a specific humidity or by means of spraying or sprinkling water onto the surface of the carrier material.

Preferably the water is bound to the carrier material by spraying a specific amount of water onto the surface of the carrier material. The quantity of water being bound to the carrier material is typically determined by comparing the weight of the carrier before and after the water spray. It is clear to the person skilled in the art that each carrier material has a specific maximum water bonding capacity. If the bonding capacity has been exceeded the water is not bound anymore to the carrier material which may emerge by the formation of unbound drops of water. It is preferred that the amount of water bound to the carrier material is high, i.e. more than 50 % of the maximum water bonding capacity of said carrier, however, it is more preferred that the amount is not more than 95 % of the maximum water bonding capacity.

The amount of water is preferably selected so that the amount of water is not exceeding 3.5 % by weight, particularly between 0.1 and 3 % by weight, preferably between 0.2 and 2.5 % by weight, based on the total weight of the polyisocyanate component (**C1**) and hardener component (**C2**) and the accelerator component (**C3**)

If the amount of water is 4 % by weight or higher the risk of surface defects such as insufficient surface aesthetics, opaque appearance or "scar structure" (german expression: "Narbenstruktur") is increased.

If the amount of water is less the accelerating action of the accelerator component (**C3**) is insufficient and the curing is hence slower.

The ratio of polyisocyanate component (**C1**) to hardener component (**C2**) is preferably selected so that the ratio of number of isocyanate groups in the polyisocyanate component (**C1**) to the number of NCO-reactive groups in the hardener component (**C2**) is preferably between 0.8 and 1.2, particularly between 0.9 and 1.1, preferably about 1.

The polyisocyanate component (**C1**) and/or a hardener component (**C2**) and/or accelerator component (**C3**) may comprise further ingredients which are typically known to the person skilled in the art of polyurethanes.

Particularly suited as such ingredients are
- dryers, such as, for example, high-reactivity isocyanates such as p-tosyl isocyanate, orthoformic esters, alkoxysilanes such as tetraethoxysilane, organoalkoxysilanes such as vinyltrimethoxysilane, and organoalkoxysilanes which have a functional group in the position α to the silane group;
- adhesion promoters, more particularly organoalkoxysilanes ("silanes") such as, for example, epoxysilanes, vinylsilanes, (meth)acrylosilanes, isocyanatosilanes, carbamatosilanes, alkylsilanes, S-(alkylcarbonyl)mercaptosilanes and aldiminosilanes, and also oligomeric forms of these silanes;
- stabilizers against heat, light and UV radiation;
- thixotropic agents;
- flow improving additives;
- solvents or plasticizer;
- matting agents;
- soft touch additives;
- flame retardants;
- surface-active substances such as, for example, wetting agents, flow control agents, deaerating agents or defoamers;
- biocides such as, for example algicides, fungicides or fungal growth inhibitors;
- anti-graffiti additives.

If using such further constituents it is advantageous to ensure that they do not greatly affect the storage stability of the components in which they are used. This means that these constituents must not to any significant extent trigger the reactions that lead to cross-linking during storage.

The polyisocyanate component (**C1**), hardener component (**C2**) and accelerator component (**C3**) are stored separately particularly in recipients such as tanks, barrels, canisters, pails or cartridges. Particularly preferred they are stored in vessels which are transportable. In a preferred embodiment at least two of the above components (**C1**, **C2**, **C3**) are individually stored in a multichamber package which allows that the two or -preferably- three components are stored and transported together assuring the accessibility of the individual components in case of application.

Furthermore preferred they are packed in tight and sealed containment. Particularly the polyisocyanate component (**C1**) is stored in an air and water tight containment.

It is preferred that the polyisocyanate component (**C1**), hardener component (**C2**) and accelerator component (**C3**) are storage stable at room temperature for at least 3 month, particularly for at least 6 months, preferably for at least 9 months during which their reactivity and viscosity are not altered by a significant amount. This means that after storage they can still be mixed and applied with the normal application tools and result in a cured product.

In a further aspect the invention relates to a method of accelerating a polyurethane composition comprising the steps of
i) mixing the polyisocyanate component (**C1**) and a hardener component (**C2**) of a three component polyurethane composition as previously described in detail in such a way that the ratio of numbers of isocyanate groups of the polyisocyanate component to the number of NCO-reactive groups of the hardener component is between 0.8 and 1.2 and forming a mixed polyurethane composition;
ii) contacting said mixed polyurethane composition with the accelerator component (**C3**) of a three component polyurethane composition as previously described in detail within the open time of said mixed polyurethane composition.

The term "open time" is known to the person skilled in the art and describes the maximal time in which the composition may be applied at the application temperature. The application temperature is typically a temperature between 0°C and 60°C, typically about 23°C.

It is preferred that that the contacting in step ii) takes place by sprinkling the accelerator component (**C3**) onto the surface of said mixed polyurethane composition.

In a further aspect the invention relates to a method of preparing a coating or a flooring comprising the steps of :
α) mixing the polyisocyanate component (**C1**) and a hardener component (**C2**) of a three component polyurethane composition as previously described in detail in such a way that the ratio of numbers of isocyanate groups of the polyisocyanate component to the number of groups being NCO-reactive at temperatures below 60°C of the hardener component is between 0.8 and 1.2 and forming a mixed polyurethane composition;
β) applying, particularly casting, said mixed polyurethane composition onto a surface of a substrate;
γ) contacting said mixed polyurethane composition with the accelerator component (**C3**) of a three component polyurethane composition as previously described in detail within the open time of said mixed polyurethane composition.

The substrate to which surface the mixed polyurethane composition is applied in step β) is typically a concrete or a resin based floor or coating. It is further preferred that said substrate is mechanically and or chemically pretreated. Such pretreatments encompass, more particularly, physical and/or chemical cleaning methods, examples being abrading, sandblasting, brushing or the like, or treatment with cleaners or solvents, or the application of an adhesion promoter, an adhesion promoter solution or a primer.

Particularly preferred is that said contacting takes place by sprinkling the accelerator component (**C3**) onto the surface of said mixed polyurethane composition.

The preferred embodiment is that the mixed polyurethane composition is self levelling. In other words the mixed polyurethane composition may be poured onto the surface and levels and is sufficiently fluent to flow and spread on the surface of the substrate mainly due to gravity. The self levelling may be supported by manual spreading.

Due to mixing of the three components (**C1**, **C2**, **C3**) the composition cures fast. Therefore said method of preparing a coating or a flooring comprises preferably a step of δ) curing of the mixed polyurethane composition.

The composition yields a coating or flooring having preferably an impeccable surface aspect. In other words a coating or a floor may be formed having no defect on the surface and is suited for high quality coatings and floorings. The flooring may be a park deck floor, an industrial floor used in food processing plants, chemical storage areas, warehouses, washrooms, laboratories, food preparation areas and chemical process plants.

In certain cases the carrier material, particularly the inorganic particulates, can be removed after curing and either be disposed or reused for manufacture of further accelerator components (**C3**).

The three component polyurethane composition according to the invention allow an easy accelerating of cure of the polyurethane composition It was observed that by increasing the amount of accelerator components (**C3**) the curing can be remarkably shortened without deteriorating the mechanical properties or the visual aspect of the cured composition. This is particularly interesting when polyisocyanate component (**C1**) and hardener components (**C2**) are used which have a long open time (typically longer than 4 hours) when not used in combination with an accelerator component. Such a system is particularly useful for large area application. By adding the accelerator components (**C3**) the composition cures very fast and allows a fast exposure to foot traffic or light weight vehicle traffic. This is particularly important in those applications where it is not possible to shut the area for a long time period. An example for such an application is a passageway or a corridor in a building. Furthermore long time periods for overcoating a freshly prepared floor or coating is very disadvantageous as it results in additional cost. Therefore the present invention leads also to shorter waiting time for overcoating and represents a very economically favourable process.

### Examples

### Preparation of accelerating component

### Quartz sand as carrier material

Dried Quartz sand (size 0.3-0.8 mm) was added to a plastic container to which a specific amount of distilled water was also added. After closing the container tightly the sand/water mixture has been thoroughly mixed by shaking for about 10 minutes. Afterwards the closed plastic container was stored for 1 day at 60°C and then cooled to room temperature.

The exact water content of each sample of accelerating component prepared this way has been determined by weighing before and after drying using a IR-drier at 160°C for 15 minutes to constant weight.

The water content of water bound to the carrier material in the individual accelerator component is as followed:
- accelerator component ***C3-1***: 0.92 % water by weight
- accelerator component ***C3-2***: 0.57 % water by weight
- accelerator component ***C3-3***: 0.33 % water by weight

### Anionic polysaccharide as carrier material

1 % by weight of Deuteron VT 819 (Deuteron GmbH) was added and thoroughly mixed with 99 % by weight of water to yield a paste which does not show any separation. This accelerator component is called ***C3-4*** in the following.

### Curing test

Desmodur® N 3600 (HDI trimer) available from Bayer Material Science was used as polyisocyanate component ***C1-1*** and was mixed with Desmophen® NH 1420 being hardener component ***C2-1***, respectively with Desmophen® NH 1520 being hardener component ***C2-2***, respectively with with Desmophen® NH 1521 being hardener component ***C2-3***, in a stoechiometric ratio, i.e. in a ratio 59.3 : 40.7, resp. 60.2 : 39.8, resp. 64.0 : 36.0.

After mixing of the polyisocyanate component ***C1-1*** and the respective hardener components were applied (22°C and 50 % relative humidity) and spread to yield a homogenous film (1 kg /m²). Instantaneously after this, the individual accelerator components have been sprinkled on the surface of the films in different amounts (4.200 kg/m², 2.770 kg/m², 1.386 kg/m²).

The hardening aspect of the surfaces was then tested at regular time periods by pressing one's finger nails on the surface. It was noted the time until the different following stages of curing have been obtained:
- "ductile": the material can be moved sideways by the finger nail by applying little pressure
- "semi-hard": the finger nail can indent the film only a small amount
- "hard": the finger nail can not indent the film

**Table 1: Curing behavior of C1-1 and C2-1 and C3-1, resp. C3-2, resp. C3-3.**

| NH1420 | ***C3-1*** | | | ***C3-2*** | | | ***C3-3*** | | |
|---|---|---|---|---|---|---|---|---|---|
| | Time to curing state [min] | | | Time to curing state [min] | | | Time to curing state [min] | | |
| | ductile | semi-hard | hard | ductile | semi-hard | hard | ductile | semi-hard | hard |
| 4.200 kg/m² | 5 | 7 | 10 | 5 | 7 | 8 | 6 | 10 | 16 |
| 2.770 kg/m² | 5 | 7 | 10 | 7 | 9 | 10 | 8 | 11 | 20 |
| 1.386 kg/m² | 7 | 8 | 12 | 9 | 11 | 15 | 10 | 14 | 24 |

**Table 2: Curing behavior of C1-1 and C2-2 and C3-1, resp. C3-2, resp. C3-3.**

| NH1520 | ***C3-1*** | | | ***C3-2*** | | | ***C3-3*** | | |
|---|---|---|---|---|---|---|---|---|---|
| | Time to curing state [min] | | | Time to curing state [min] | | | Time to curing state [min] | | |
| | ductile | semi-hard | hard | ductile | semi-hard | hard | ductile | semi-hard | hard |
| 4.200 kg/m² | 60 | 180 | 285 | 80 | 240 | 370 | 100 | 270 | 420 |
| 2.770 kg/m² | 85 | 210 | 330 | 140 | 260 | 390 | 150 | 300 | 480 |
| 1.386 kg/m² | 165 | 240 | 390 | 190 | 345 | 450 | 210 | 390 | >480 |

**Table 3: Curing behavior of C1-1 and C2-3 and C3-1, resp. C3-2, resp. C3-3.**

| NH1521 | ***C3-1*** | | | ***C3-2*** | | | ***C3-3*** | | |
|---|---|---|---|---|---|---|---|---|---|
| | Time to curing state [min] | | | Time to curing state [min] | | | Time to curing state [min] | | |
| | ductile | semi-hard | hard | Ductile | semi-hard | hard | ductile | semi-hard | hard |
| 4.200 kg/m² | 120 | 210 | >480 | 180 | 300 | >480 | 335 | 420 | >480 |
| 2.770 kg/m² | 165 | 270 | >480 | 210 | 330 | >480 | 330 | 460 | >480 |
| 1.386 kg/m² | 180 | 300 | >480 | 240 | 420 | >480 | 420 | 460 | >480 |

After 1 day storage at 23°C/50 % rel. humidity all films of table 1, 2 and 3 were assessed to be "hard".

In another set of experiments Desmodur® N 3600 (HDI trimer) available from Bayer Material Science was used as polyisocyanate component ***C1-1*** and was mixed with Desmophen® NH 1420 being hardener component ***C2-1***, respectively with Desmophen® NH 1520 being hardener component ***C2-2***, respectively with with Desmophen® NH 1521 being hardener component ***C2-3***, in a stoechiometical ratio, i.e. in a ratio 59.3:40.7,resp.60.2:39.8,resp.64.0:36.0. To 100 g of such an individual mixture different amounts of the accelerator component ***C3-4*** was added to yield a water content of 0.25%, 0.5%, 1.0 % respectively 2.0% by weight. Furthermore a control experiment was made without adding the accelerator component ***C3-4*** yielding a water content of 0% by weight.

Instantaneously after this a film was spread (1 kg/m²). The curing has been assessed by the finger nail test described above. Furthermore the film was also tested on stickiness by touch with the fingertip and assessed as "sticky", "slightly sticky" and "not sticky".

Finally, the above mixtures have been also tested on the applicability by stirring the composition after individual time intervals with a spatula in a plastic cup and assessed by as "slightly thicker", "thick", "tough" and "very tough".

**Table 4. Properties of composition made of C1-1 and C2-1 and C3-4.**

| N1420 | | | |
|---|---|---|---|
| Amount of water [% by weight] | Application behavior | State of cure | Stickiness |
| 0 | 10 min.: slightly thicker 15 min.: thick 20 min.: tough 25 min.: very tough | 25 min.: ductile 35 min.: hard 45 min.: hard | 25 min.: sticky 35 min.: slightly sticky 45 min.: not sticky |
| 0.25 | 5 min: slightly thicker 8 min: thick 10 min: tough 11 min very tough | 25 min: ductile 35 min hard | 15 min.: sticky 25 min.: slightly sticky 35 min.: not sticky |
| 0.5 | Not measured | Not measured | Not measured |
| 1.0 | Not measured | Not measured | Not measured |
| 2.0 | Not measured | Not measured | Not measured |

**Table 5. Properties of composition made of C1-1 and C2-2 and C3-4.**

| N1520 | | | |
|---|---|---|---|
| Amount of water [% by weight] | Application behavior | State of cure | Stickiness |
| 0 | 15 min.: slightly thicker 60 min.: thick 210 min.: tough 300 min.: very tough | 25 min.: ductile 35 min.: hard 45 min.: hard | 25 min.: sticky 35 min.: slightly sticky 45 min.: not sticky |
| 0.25 | 15 min: slightly thicker 40 min: thick 70 min: tough 120 min.: very tough | 25 min: ductile 35 min hard | 15 min.: sticky 25 min.: slightly sticky 35 min.: not sticky |
| 0.5 | 15 min: slightly thicker 40 min: thick 60 min: tough 80 min.: very tough | 25 min: ductile 35 min hard | 15 min.: sticky 25 min.: slightly sticky 35 min.: not sticky |
| 1.0 | 10 min: slightly thicker 25 min: thick 50 min: tough 70 min.: very tough | 25 min: ductile 35 min hard | 15 min.: sticky 25 min.: slightly sticky 35 min.: not sticky |
| 2.0 | 10 min: slightly thicker 20 min: thick 40 min: tough 50 min.: very tough | 25 min: ductile 35 min hard | 15 min.: sticky 25 min.: slightly sticky 35 min.: not sticky |

**Table 6. Properties of composition made of C1-1 and C2-3 and C3-4.**

| N1521 | | | |
|---|---|---|---|
| Amount of water [% by weight] | Application behavior | State of cure | Stickiness |
| 0 | 60 min.: slightly thicker 360 min.: thick | After 360 min.: still liquid | After 360 min.: still sticky |
| 0.25 | 60 min: slightly thicker 240 min: thick 300 min: tough | After 360 min.: still liquid | After 360 min. : still sticky |
| 0.5 | 60 min: slightly thicker 180 min: thick 270 min: tough 300 min very tough | 330 min: ductile 360 min.: semi-hard | 330 min.: sticky 360 min.: sticky |
| 1.0 | 60 min: slightly thicker 120 min: thick 240 min.: tough 270 min: very tough | 330 min: ductile 360 min.: semi-hard | 330 min.: sticky 360 min.: sticky |
| 2.0 | 60 min: slightly thicker 105 min: thick 210 min: tough 225 min very tough | 210 min: ductile 330 min.: semi-hard | 210 min.: sticky 330 min.: sticky |

After 1 day storage at 23°C/50 % rel. humidity all films of table 4, 5 and 6 were assessed to be "hard" and "not sticky".

The experiments of table 1 to 6 show clearly that examples of invention cure very fast and particularly much faster than the examples of comparison having no accelerator component.

## Claims

1. Three component polyurethane composition consisting of a polyisocyanate component (**C1**) and a hardener component (**C2**) and an accelerator component (**C3**)
wherein
the polyisocyanate component(**C1**) comprises at least a polyisocyanate(**PI**); the hardener component (**C2**) comprises at least a compound of formula (I) 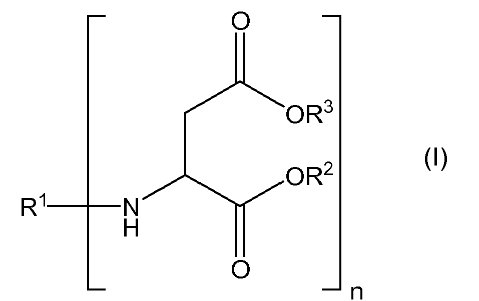 the accelerator component (**C3**) comprises at least water which is bound to a carrier material (**CM**);
wherein
R¹ represents a n-valent organic radical
R² and R³ represent independently of one another an aliphatic or cycloaliphatic or aromatic radical
n is a value of 2 to 6, particularly 2 or 3.

2. Three component polyurethane composition according to claim 1, **characterized in that** the compound of formula (I) has an amine value of 150 - 230 mg KOH/g, particularly of 185 - 205 mg KOH/g.

3. Three component polyurethane composition according to claim 1 or 2, **characterized in that** the compound of formula (I) has at 25°C a viscosity of between 700 and 3000 mPas, particularly between 750 and 2500 mPas, measured according to DIN 53 019.

4. Three component polyurethane composition according to any of the preceding claims, **characterized in that** the polyisocyanate (**PI**) is an aliphatic or cycloaliphatic diisocyanate or triisocyanate or an oligomer thereof.

5. Three component polyurethane composition according to any of the preceding claims, **characterized in that** the polyisocyanate (**PI**) is a biuret or an uretdione or an isocyanurate of 1,6-hexamethylene diisocyanate (HDI).

6. Three component polyurethane composition according to any of the preceding claims, **characterized in that** the carrier material (**CM**) is an ionic polysaccharide.

7. Three component polyurethane composition according to anyone of the preceding claims 1 to 5, **characterized in that** the carrier material (**CM**) is an inorganic particulate material, particularly sand.

8. Three component polyurethane composition according to claim 7, **characterized in that** the carrier material (**CM**) has a mean particle size of between 50 µm and 5 mm, preferably between 100 µm and 900 µm.

9. Three component polyurethane composition according to any of the preceding claims, **characterized in that** the amount of water is 0.2 - 3 % by weight, relative to the weight sum of polyisocyanate (**PI**) and the compound of formula (I).

10. Method of accelerating a polyurethane composition comprising the steps of
i) mixing the polyisocyanate component (**C1**) and a hardener component (**C2**) of a three component polyurethane composition according to any of claims 1 to 9 in such a way that the ratio of numbers of isocyanate groups of the polyisocyanate component to the number of NCO-reactive groups of the hardener component is between 0.8 and 1.2 and forming a mixed polyurethane composition;
ii) contacting said mixed polyurethane composition with the accelerator component (**C3**) of a three component polyurethane composition according to any of claims 1 to 9 within the open time of said mixed polyurethane composition.

11. Method according to claim 10, **characterized in that** the contacting takes place by sprinkling the accelerator component (**C3**) onto the surface of said mixed polyurethane composition.

12. Method of preparing a coating or a flooring comprising the steps of
α) mixing the polyisocyanate component (**C1**) and a hardener component (**C2**) of a three component polyurethane composition according to any of claims 1 to 9 in such a way that the ratio of numbers of isocyanate groups of the polyisocyanate component to the number of groups being NCO-reactive at temperatures below 60°C of the hardener component is between 0.8 and 1.2 and forming a mixed polyurethane composition;
β) applying, particularly casting, said mixed polyurethane composition onto a surface of a substrate;
γ) contacting said mixed polyurethane composition with the accelerator component (**C3**) of a three component polyurethane composition according to any of claims 1 to 9 within the open time of said mixed polyurethane composition.

13. Method according to claim 12, **characterized in that** the contacting takes place by sprinkling the accelerator component (**C3**) onto the surface of said mixed polyurethane composition.

14. Method according to claim 12 or 13 **characterized in that** said mixed polyurethane composition is self levelling.

15. Method according to claim 12 or 13 or 14 **characterized in that** the method comprises a step of δ) curing of the mixed polyurethane composition.

16. Floor obtained by a method according to claim 15.
